(19) Europäisches Patentamt
European Patent Office
Office européen des brevets

(11) **EP 1 762 122 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**11.05.2011 Patentblatt 2011/19**

(45) Hinweis auf die Patenterteilung:
**26.03.2008 Patentblatt 2008/13**

(21) Anmeldenummer: **06742741.9**

(22) Anmeldetag: **28.04.2006**

(51) Int Cl.:
*H05B 3/00* (2006.01)   *H05B 3/14* (2006.01)
*B29C 67/00* (2006.01)   *B22F 3/10* (2006.01)
*B23K 26/34* (2006.01)

(86) Internationale Anmeldenummer:
**PCT/EP2006/003991**

(87) Internationale Veröffentlichungsnummer:
**WO 2006/125507 (30.11.2006 Gazette 2006/48)**

(54) **STRAHLUNGSHEIZUNG ZUM HEIZEN DES AUFBAUMATERIALS IN EINER LASERSINTERVORRICHTUNG**

RADIANT HEATER FOR HEATING THE BUILDING MATERIAL IN A LASER SINTERING DEVICE

CHAUFFAGE PAR RAYONNEMENT POUR CHAUFFER LE MATERIAU DE CONSTRUCTION DANS UN DISPOSITIF DE FRITTAGE LASER

(84) Benannte Vertragsstaaten:
**DE FR GB IT**

(30) Priorität: **26.05.2005 DE 102005024790**

(43) Veröffentlichungstag der Anmeldung:
**14.03.2007 Patentblatt 2007/11**

(73) Patentinhaber: **EOS GmbH Electro Optical Systems**
**82152 Krailling (DE)**

(72) Erfinder: **PHILIPPI, Jochen**
**81377 München (DE)**

(74) Vertreter: **Hofer, Dorothea**
**Prüfer & Partner GbR**
**Patentanwälte**
**Sohnckestrasse 12**
**81479 München (DE)**

(56) Entgegenhaltungen:
**EP-A- 0 470 705     EP-A1- 0 632 479**
**WO-A-96/29192       US-A- 4 818 562**
**US-A- 5 155 321     US-A1- 2004 074 898**

EP 1 762 122 B2

**Beschreibung**

Die vorliegende Erfindung bezieht sich auf eine Strahlungsheizung nach dem Oberbegriff des Patentanspruchs 1 und auf eine Lasersintervorrichtung mit einer solchen Strahlungsheizung.

Eine derartige Strahlungsheizung und eine solche Lasersintervorrichtung zum Herstellen eines dreidimensionalen Objekts sind aus der WO 92/08566 bekannt.

Aus der US 2004/0074898 A1 ist ein Widerstandsheizelement aus Graphit für das Prozessieren von Halbleiterwafern bei Temperaturen bis zu 1200°C bekannt. Die Dicke des Widerstandselements beträgt dabei 0,1 inch (2,54 mm) oder mehr. Aufgrund der hohen Dicke des Widerstandsheizelements ist dessen thermische Trägheit hoch. Insbesondere bei niedrigeren Temperaturen ist damit keine schnelle Temperatursteuerung/-regelung möglich.

Bei der Herstellung eines dreidimensionalen Objekts durch aufeinander folgendes Verfestigen von Schichten eines pulverförmigen Materials mittels eines Laserstrahls muss die Temperatur des Materials innerhalb eines bestimmten Prozessfensters liegen, um eine gute Qualität des dreidimensionalen Objekts sicherzustellen. Für eine schnelle und genaue Regelung/ Steuerung dieser Temperatur ist das dynamische Verhalten der Strahlungsheizung entscheidend.

Der Erfindung liegt daher die Aufgabe zugrunde, eine Strahlungsheizung für eine Lasersintervorrichtung bzw. eine Lasersintervorrichtung mit einer solchen Strahlungsheizung bereitzustellen, mit der die Temperatur des Materials schnell und genau geregelt/ gesteuert werden kann.

Die Aufgabe wird erfüllt durch eine Strahlungsheizung nach Anspruch 1 und durch eine Lasersintervorrichtung zum Herstellen eines dreidimensionalen Objekts nach Anspruch 11. Weiterbildungen der Erfindung sind in den Unteransprüchen beschrieben.

Die Verwendung eines Flächenstrahlers in einer Lasersintervorrichtung hat gegenüber der Verwendung üblicher Heizstrahler wie Lampen oder Heizstäben den Vorteil, dass er bei gleicher abgestrahlter Leistung mit geringeren Temperaturen betrieben werden kann. Dies führt zu weniger Seitwärtsabstrahlung an die Prozesskammerwände und eine kühlere Prozesskammeratmosphäre.

Die erfindungsgemäße Strahlungsheizung weist insbesondere den Vorteil auf, dass sie ein Wärmeabstrahlelement mit einer geringen thermischen Trägheit besitzt und deshalb die von dem Wärmeabstrahlelement abgegebene Leistung schnell verändert werden kann. Dies ermöglicht eine sehr schelle und genaue Regelung/ Steuerung der Temperatur des mit der Strahlungsheizung erwärmten Materials.

Mit der Erfindung ist weiter die Herstellung eines dreidimensionalen Objekts mit hoher Qualität bei geringer Bauzeit möglich.

Graphit hat für das erfindungsgemäße Wärmeabstrahlelement den Vorteil, dass es eine hohe Wärmeleitfähigkeit und gleichzeitig eine geringe spezifische Wärmekapazität besitzt. Dies entspricht einer hohen Temperaturleitzahl a, die sich nach folgender Formel aus der spezifischen Wärmeleitfähigkeit λ, der spezifischen Dichte $\rho$ und der spezifischen Wärmekapazität c berechnen lässt:

$$a = \lambda / (\rho \cdot c).$$

Mit einer hohen Temperaturleitzahl geht eine geringe thermische Trägheit und eine homogene Temperaturverteilung bzw. Abstrahlleistung des Wärmeabstrahlelements einher. Graphit hat weiter den Vorteil, dass es bei hohen Temperaturen eingesetzt werden kann.

Weitere Merkmale und Zweckmäßigkeiten der Erfindung ergeben sich aus der Beschreibung von Ausführungsbeispielen anhand der beigefügten Zeichnungen.

Von den Figuren zeigen:

Fig. 1    eine schematische Darstellung eines Ausführungsbeispiels der Lasersintervorrichtung;

Fig. 2    eine Strahlungsheizung nach einer ersten Ausführungsform;

Fig. 3    eine Abwandlung der Strahlungsheizung aus Fig. 2;

Fig. 4    eine Strahlungsheizung nach einem Vergleichsbeispiel; und

Fig. 5    eine Strahlungsheizung nach einem weiteren Vergleichsbeispiel.

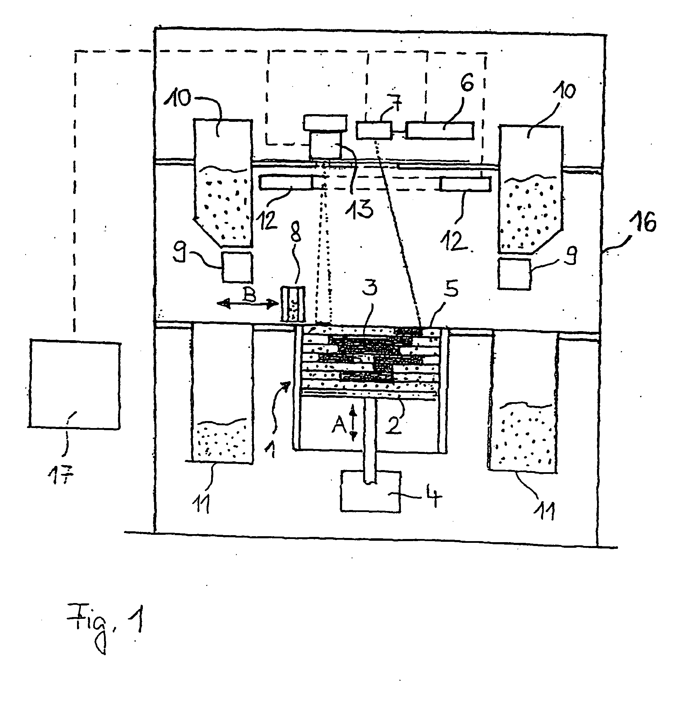

Fig. 1 zeigt eine Lasersintervorrichtung mit der erfindungsgemäßen Strahlungsheizung. Die Lasersintervorrichtung weist einen nach oben offenen Behälter 1 auf. In dem Behälter 1 ist ein Träger 2 zum Tragen des zu bildenden Objekts 3 vorgesehen. Der Träger 2 ist mittels eines Antriebs 4 in dem Behälter 1 in vertikaler Richtung A auf und ab bewegbar. Der obere Rand des Behälters 1 definiert eine Arbeitsebene 5. Oberhalb der Arbeitsebene 5 ist eine Bestrahlungseinrichtung 6 in Form eines Lasers angeordnet, die einen gerichteten Laserstrahl abgibt, der über eine Ablenkvorrichtung 7 auf die Arbeitsebene 5 abgelenkt wird. Ferner ist ein Beschichter 8 zum Aufbringen einer Schicht eines zu verfestigenden Pulvermaterials auf die Oberfläche des Trägers 2 oder eine zuletzt verfestigte Schicht vorgesehen. Der Beschichter 8 ist mittels eines durch die Pfeile B schematisch angedeuteten Antriebs über die Arbeitsebene 5 hin und her bewegbar. Durch zwei Dosierer 9 links und rechts vom Baufeld wird der Beschichter aus zwei Pulvervorratsbehälter 10 gespeist. Ferner sind links und rechts vom Baufeld zwei Überlaufbehälter 11 vorgesehen, die das beim Beschichten anfallende überschüssige Pulver aufnehmen können.

Die Vorrichtung weist außerdem eine über der Arbeitsebene 5 angeordnete Strahlungsheizung 12 zum Vorerwärmen einer aufgetragenen aber noch nicht gesinterten Pulverschicht auf eine für das Sintern geeignete Arbeitstemperatur $T_A$ auf. Die Strahlungsheizung 12 ist dabei so ausgebildet, dass die aufgetragene Pulverschicht gleichmäßig erwärmt werden kann.

In einem Abstand oberhalb der Arbeitsebene 5 ist eine Temperaturmesseinrichtung 13 vorgesehen, die zum berührungslosen Messen der Temperatur der zuletzt aufgetragenen bzw. obersten Pulverschicht dient.

Durch eine Prozesskammer 16 ist der Arbeitsbereich von der Umgebung abgeschlossen. Dadurch kann ggf. die Oxidation des Pulvers und das Freiwerden möglicher Prozessgase verhindert werden.

Eine Steuer- und/oder Regeleinrichtung 17 dient zum Steuern und/oder Regeln der Leistung der Strahlungsheizung 12 sowie der Leistung der Bestrahlungseinrichtung 6. Dazu ist die Steuer- und/oder Regeleinrichtung 17 mit der Strahlungsheizung 12, der Temperaturmesseinrichtung 13 und mit der Bestrahlungseinrichtung 6 verbunden.

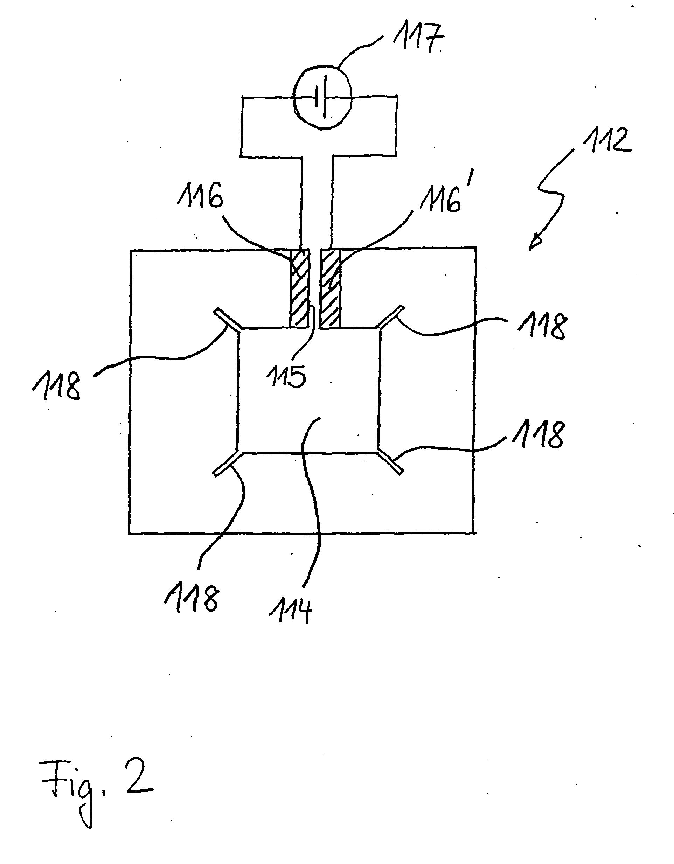

Fig. 2 zeigt eine erste Ausführungsform der Strahlungsheizung.

Die Strahlungsheizung 112 nach der ersten Ausführungsform weist ein Widerstandselement 113 als Wärmeabstrahlelement auf. Das Widerstandselement 113 ist aus einer Graphitplatte (z.B. Kohlefaserverstärkte Graphitplatte ®SigraBond der Firma SGL Carbon) mit einer Temperaturleitzahl bei einer Temperatur von 20°C von $a > 1{,}5 \cdot 10^{-4}$ m$^2$/s und einer Dicke von d = 2,0 mm ausgebildet. Es besitzt im Wesentlichen die Form eines Rechtecks mit einer in der Mitte angeordneten rechteckigen öffnung 114 für den Laserstrah1 und den optischen Pfad der Temperaturmesseinrichtung. Das die rechteckige öffnung umgebende Widerstandselement ist umfangsseitig durch einen Spalt 115 unterbrochen. Auf beiden Seiten des Spalts ist jeweils ein als Kupferschiene ausgebildeter Kontakt 116 bzw. 116' an das Widerstandselement angebracht. Eine für hohe Ströme (ca. 20-40 A bei einer Spannung von 30-60V) ausgelegte steuerbare Spannungsquelle 117 ist an die Kontakte 116, 116' angeschlossen. Von den Ecken der Öffnung 115 erstrecken sich Schlitze 118 in Richtung zu den Ecken des äußeren Umfangs des Widerstandelements um eine gleichmäßigere Verteilung der Stromflussdichte bzw. eine Erhöhung der Heizleistung im Bereich der äußeren Ecken nach Anlegen einer Spannung an die Kontakte 116, 116' in dem Widerstandselement zu erreichen.

Im Folgenden wird der Betrieb der zuvor beschriebenen Lasersintervorrichtung und der erfindungsgemäßen Strahlungsheizung beschrieben werden.

Zunächst wird eine erste Pulverschicht mit dem Beschichter 8 auf den Träger 2 aufgebracht.

Entscheidend für die Qualität des fertigen Objekts ist insbesondere, dass die Temperatur der zu verfestigenden obersten Pulverschicht eine Temperatur in einem bestimmten Bereich, dem Prozessfenster hat. Oberhalb dieses Prozessfensters wird das Pulver schon ohne zusätzliche Strahlungsenergie gesintert, während sich bei Temperaturen unterhalb des Prozessfensters Verspannungen in der verfestigten Schicht ausbilden. Vielfach wird auch der sogenannte Curl-Effekt, bei dem sich die Ränder der verfestigten Schicht aufbiegen bzw. aufrollen, auf eine zu geringe Temperatur der obersten Pulverschicht zurückgeführt. Die mit dem Beschichter aufgebrachte Pulverschicht muss daher zum Erreichen guter Ergebnisse, insbesondere zum Vermeiden von Verspannungen in dem hergestellten Objekt, vor dem Verfestigen mit der Strahlungsheizung 12 auf eine Arbeitstemperatur $T_A$ innerhalb des Prozessfensters erwärmt werden.

Dazu wird nach dem Aufbringen der Pulverschicht die Temperatur dieser Schicht berührungslos mit der Temperaturmesseinrichtung 13 gemessen. In Abhängigkeit von der dabei gemessenen Temperatur wird die Heizleistung der Strahlungsheizung 12 bestimmt. Ist die oberste Pulverschicht auf die Arbeitstemperatur $T_A$ erwärmt, so werden die dem Querschnitt des Objekts entsprechenden Stellen in der Pulverschicht durch Bestrahlen mit dem Laser verfestigt.

Nach dem Verfestigen einer Schicht wird der Träger 2 um eine der Schichtdicke entsprechende Strecke abgesenkt und mit dem Beschichter 8 eine neue Pulverschicht auf die zuvor mit dem Laser belichtete Schicht aufgebracht. Dann werden die zuvor beschriebenen Schritte wiederholt bis die Herstellung des dreidimensionalen Objekts abgeschlossen ist.

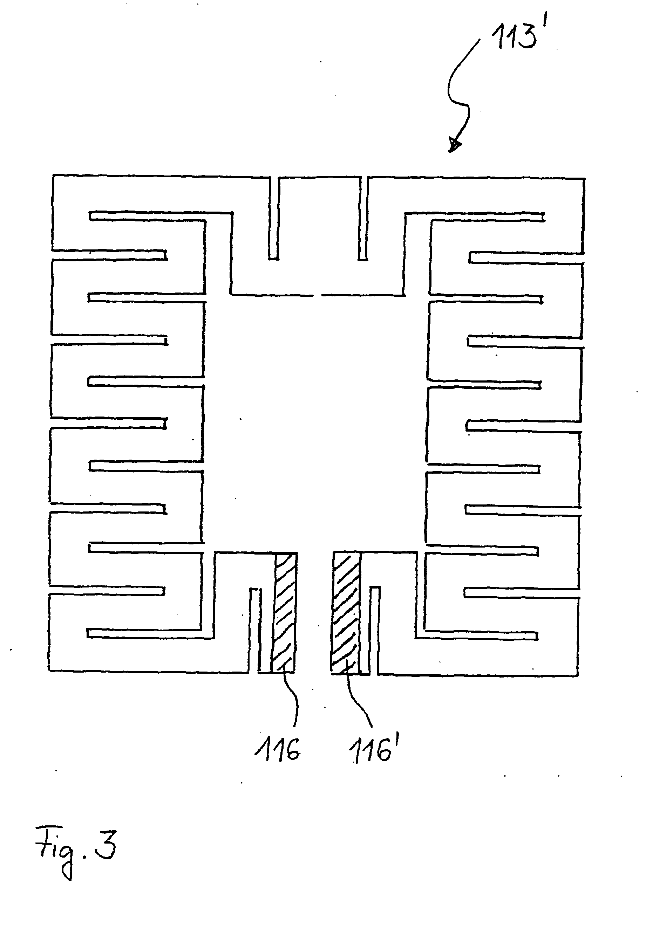

In Fig. 3 ist eine Abwandlung der ersten Ausführungsform dargestellt. Ein Wärmeabstrahlelement 113' nach dieser Abwandlung unterscheidet sich von dem in Fig. 2 gezeigten Wärmeabstrahlelement dadurch, dass es mäanderartig Flächenbahnen aufweist, wodurch der ohmsche Widerstandswert und damit die Heizleistung für eine bestimmte, an das Widerstandselement angelegte Spannung erhöht werden kann.

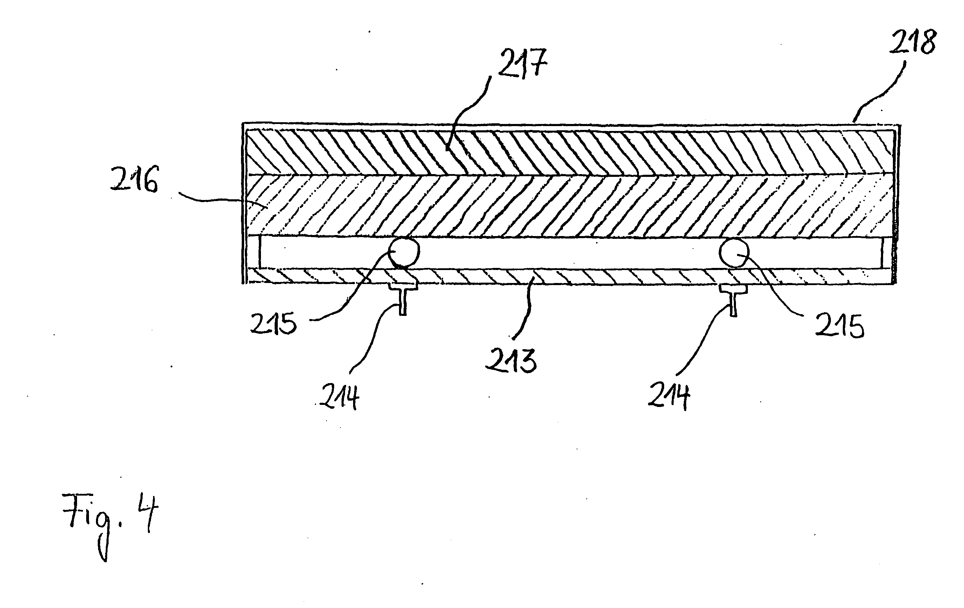

In Fig. 4 ist ein Vergleichsbeispiel einer Strahlungsheizung im Querschnitt dargestellt.

Bei der Strahlungsheizung ist eine Graphitfolie 213 (z.B. ®Sigraflex Graphitfolie von SGL Carbon) als Wärmeabstrahlelement vorgesehen, die bei einer Temperatur von 20°C in einer Richtung parallel zur Folie eine Temperaturleitzahl von $a = 2{,}14 \cdot 10^{-4}$ m$^2$/s und eine Dicke von d = 0,5 mm besitzt.

Die Graphitfolie 213 ist zum Erreichen hoher Emissionskoeffizienten mit einem Schwarzstrahlerspray behandelt. Mit dünnen steifen Profilleisten 214 wird sie an einen Heizdraht 215 gedrückt, sodass ein guter thermischer Kontakt zwischen dem Heizdraht 215 und der Graphitfolie 213 ausgebildet ist. Die Profilleisten tragen darüber hinaus zu der mechanischen Stabilisierung der Graphitfolie bei.

Auf der der Graphitfolie abgewandten Seite des Heizdrahts 215 ist eine erste Isolierung 216 vorgesehen, deren Unterseite für Wärmestrahlung reflektierend ist. Als Material für die erste Isolierung wird ein Material mit mechanischer Stabilität gewählt. Vorzugsweise ist diese erste Isolierung 216 aus Graphit-Hartfilz (z.B. ®SigraTherm Graphit-Hartfilz der Firma SGL Carbon) mit einer geringen Wärmeleitung (der Wärmeleitkoeffizient λ von ®SigraTherm Graphit-Hartfilz beträgt bei Temperaturen unter 1000°C weniger als 0,3 W/mK).

Auf der dem Heizdraht 215 abgewandten Seite der ersten Isolierung 216 ist eine zweite Isolierung 217 vorgesehen. Diese zweite Isolierung muss keine mechanische Stabilität, dafür aber gute Wärmeisolationseigenschaften besitzen. Vorzugsweise besteht die zweite Isolierung aus einem Material mit einer Wärmeleitfähigkeit von λ = 0,03 W/mK oder weniger bei Temperaturen unter 400°C (z.B. ®Promalight von der Firma Proma).

Auf der der Graphitfolie abgewandten Seite und seitlich ist die erste und zweite Isolierung zur mechanischen Stabilisierung von einem Edelstahlblechrahmen 218 umgeben, an dem auch die Profilleisten 214 angebracht sind. Ebenfalls zur mechanischen Stabilisierung sind seitlich zwischen der Graphitfolie und der ersten Isolierung 216 Abstandhalter 218 aus einem isolierenden Material vorgesehen.

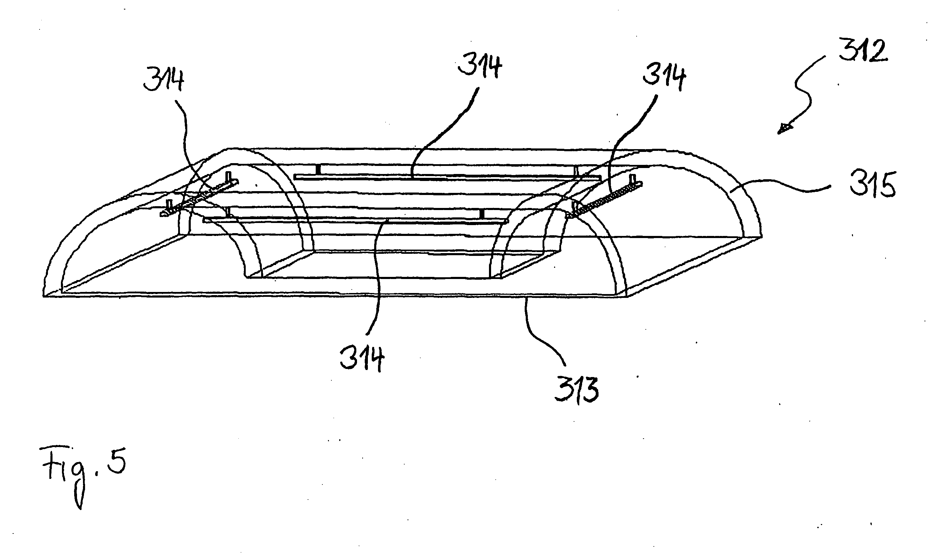

In Fig. 5 ist ein weiteres Vergleichsbeispiel einer Strahlungsheizung dargestellt.

Wie bei der Fig. 4 ist bei der Strahlungsheizung 312 als Wärmeabstrahlelement eine Graphitfolie 313 vorgesehen. Im Unterschied zur Fig. 4 wird diese jedoch nicht mit einem Heizdraht geheizt, sondern mit IR-Heizstrahlern 314, die auf einer Seite der Graphitfolie in einem Abstand angeordnet sind. Zu den Seiten und zu der der Graphitfolie abgewandten Seite hin sind die IR-Heizstrahler 314 beabstandet von einem isolierenden Mantel 315 umgeben. Der isolierende Mantel zeichnet sich dadurch aus, dass er zu der Seite der IR-Strahler hin für Wärmestrahlung reflektierend ist und eine möglichst geringe Wärmeleitfähigkeit besitzt. Wie die aus der ersten und zweiten Isolierung bestehende Wärmeisolierung bei der Fig. 4 kann der isolierende Mantel 315 mehrschichtig aufgebaut sein, um gute mechanische Stabilität mit gleichzeitig guten Isoliereigenschaften zu verbinden.

Alternativen und Abwandlungen der oben beschriebenen Lasersintervorrichtung, der Strahlungsheizung und des oben beschriebenen Verfahrens sind möglich.

Die erfindungsgemäße Strahlungsheizung wurde so beschrieben, dass das Wärmeabstrahlelement eine Form mit einem rechteckigen Umriss aufweist. Diese Geometrie des Wärmeabstrahlelements ist besonders geeignet zum gleichmäßigen Heizen eines rechteckigen Zielfelds. Jedoch ist die Form des Wärmeabstrahlelements nicht darauf beschränkt, sondern kann beliebige andere flächige Formen aufweisen, die an die entsprechenden geometrischen Verhältnisse angepasst sind. So kann das Wärmeabstrahlelement z.B. mit einem kreisförmigen Umriss ausgebildet sein. Entsprechend kann auch die rechteckige Öffnung eine andere z.B. eine runde Form haben.

Es ist auch möglich mehrerer Heizzonen vorzusehen. So können bei einer Strahlungsheizung nach der ersten Ausführungsform mehrere Widerstandsheizelemente, die jeweils unabhängig voneinander betrieben werden, um mehrere voneinander unabhängige Heizzonen zu bilden.

Bei der ersten Ausführungsform wurde als Material des Wärmeabstrahlelements eine Graphitplatte beschrieben. Die Verwendung eines anderen Materials ist möglich, solange die Temperaturleitzahl bei einer Temperatur von 20°C einen Wert über etwa a = 1,5·10⁻⁴ m²/s aufweist. Es ist insbesondere auch möglich, wie bei der Fig. 4 eine Graphitfolie für das Wärmeabstrahlelement zu verwenden. Ggf. sind mechanische Stabilisierungselemente vorzusehen, wenn das Wärmeabstrahlelement nicht selbsttragend ist. Es ist z.B. möglich, die Graphitfolie auf ein Gitter aufzuspannen oder aufzubringen.

Die Fig. 4 wurde so beschrieben, dass das Wärmeabstrahlelement an einen Heizdraht gedrückt wird. Der Heizdraht kann jedoch auch innerhalb des Wärmeabstrahlelements und insbesondere in einer Nut in dem Wärmeabstrahlelement verlaufen. Ferner kann der Heizdraht unter Bildung einer Sandwichstruktur zwischen zwei Graphitelemente eingepresst sein.

Bei der Fig. 4 und 5 wurde die Verwendung einer Graphitfolie als Wärmeabstrahlelement beschrieben. Es ist jedoch auch die Verwendung eines anderen Materials möglich, dessen Temperaturleitzahl bei 20°C oberhalb von etwa a = 1,5.10⁻⁴ m²/s, vorzugsweise oberhalb von a = 2.10⁻⁴ m²/s, liegt. Insbesondere kann auch eine Graphitplatte verwendet werden.

Die verschiedenen Ausführungsformen der Strahlungsheizung wurden mit Wärmeabstrahlelementen mit einer bestimmten Dicke beschrieben. Eine andere, insbesondere eine geringere Dicke ist möglich. Hinsichtlich der thermischen Eigenschaften ist eine möglichst geringe Dicke wünschenswert. Begrenzt wird die Dicke nach unten durch die mechanische Stabilität.

**Patentansprüche**

1. Strahlungsheizung zum Heizen des Aufbaumaterials in einer Lasersintervorrichtung mit einem flächigen Wärmeabstrahlelement (113, 213, 313) wobei an dem Wärmeabstrahlelement (113) Stromanschlüsse (116, 116') vorgesehen sind, sodass durch das Wärmeabstrahlelement (116) in Flächenrichtung Strom zum Betreiben als Widerstandsheizelement geschickt werden kann, **dadurch gekennzeichnet, dass** das Wärmeabstrahlelement (113, 213, 313) aus einem Material mit einer geringen thermischen Trägheit besteht und dass das Wärmeabstrahlelement (113, 213, 313) aus einem Material besteht, das bei einer Temperatur von 20°C eine Temperaturleitzahl von mehr als etwa $1{,}5 \cdot 10^{-4}$ m$^2$/s besitzt wobei das Wärmeabstrahlelement (113') zumindest in einem Abschnitt in Form einer mäanderartigen Flächenbahn ausgebildet ist.

2. Strahlungsheizung nach Anspruch 1, wobei das Wärmeabstrahlelement (113, 213, 313) aus einem Material besteht, das bei einer Temperatur von 20°C eine Temperaturleitzahl von mehr als etwa $2 \cdot 10^{-4}$ m$^2$/s besitzt.

3. Strahlungsheizung nach einem der Ansprüche 1 und 2, wobei das Wärmeabstrahlelement (113, 213, 313) ein Dicke von etwa 2 mm oder weniger aufweist.

4. Strahlungsheizung nach einem der Ansprüche 1 bis 3, wobei das Wärmeabstrahlelement (213, 313) aus einer Graphitfolie besteht.

5. Strahlungsheizung nach einem der Ansprüche 1 bis 3, wobei das Wärmeabstrahlelement aus einer Graphitplatte (113) besteht.

6. Strahlungsheizung nach einem der Ansprüche 1 bis 5, wobei ein Heizdraht (215) in Kontakt mit dem Wärmeabstrahlelement (213) zum Heizen des Wärmeabstrahlelements (213) vorgesehen ist.

7. Strahlungsheizung nach einem der Ansprüche 1 bis 6, wobei ein IR-Heizstrahler (314) zum Heizen des Wärmeabstrahlelements (313) vorgesehen ist.

8. Strahlungsheizung nach Anspruch 7, weiter mit einem isolierenden Mantel (315), wobei der Heizstrahler (314) zwischen dem isolierenden Mantel (315) und dem Wärmeabstrahlelement (313) eingeschlossen ist und der isolierende Mantel (315) auf seiner dem Heizstrahler (314) zugewandten Seite für die von dem Heizstrahler (314) abgestrahlte Strahlung reflektierend ist.

9. Strahlungsheizung nach einem der Ansprüche 1 bis 8, wobei das Wärmeabstrahlelement (113, 213, 313) in der Mitte eine Öffnung zum Durchführen eines Laserstrahls aufweist.

10. Strahlungsheizung nach einem der Ansprüche 1 bis 9, wobei in einem Abstand auf einer Seite des Wärmeabstrahlelements eine Isolierung (216) aus Graphit vorgesehen ist.

11. Lasersintervorrichtung zum Herstellen eines dreidimensionalen Objekts durch aufeinander folgendes Verfestigen von Schichten eines verfestigbaren pulverförmigen Materials an den dem jeweiligen Querschnitt entsprechenden Stellen mittels Strahlung mit einer Strahlungsheizung (112, 212, 312) nach einem der Ansprüche 1 bis 10 zum Erwärmen des verfestigbaren Materials.

## Claims

1. Radiant heating for heating the building material in a laser sintering device comprising a laminar heat radiating element (113, 213, 313),
   wherein current terminals (116, 116') are provided at the heat radiating element (113), so that a current can be circulated through the heat radiating element in the direction of the surface in order to operate it as resistive heating element
   **characterized in that**
   the heat radiating element (113, 213, 313) consists of a material having a low thermal inertia and
   **in that** said heat radiating element (113, 213, 313) consists of a material having a thermal diffusivity of more than approximately $1.5 \cdot 10^{-4}$ m$^2$/s at a temperature of 20°C
   wherein at least a portion of the heat radiating element (113') is formed in the shape of a meandering sheet-like path.

2. Radiant heating according to claim 1, wherein the heat radiating element (113, 213, 313) consists of a material having a thermal diffusivity of more than approximately $2 \cdot 10^{-4}$ m$^2$/s at a temperature of 20°C.

3. Radiant heating according to one of claims 1 and 2, wherein the heat radiating element (113, 213, 313) has a thickness of approximately 2 mm or less.

4. Radiant heating according to one of claims 1 to 3, wherein the heat radiating element (213, 313) consists of a graphite foil.

5. Radiant heating according to one of claims 1 to 3, wherein the heat radiating element consists of a graphite plate (113).

6. Radiant heating according to one of claims 1 to 5, wherein a heating wire (215) is provided in contact to the heat radiating element (213) for heating the heat radiating element (213).

7. Radiant heating according to one of claims 1 to 6, wherein an IR radiant heater (314) is provided for heating the heat radiating element (313).

8. Radiant heating according to claim 7 further comprising an insulating shell (315), wherein
   the radiant heater (314) is included between the insulating shell (315) and the heat radiating element (313) and
   the insulating shell (315) on its side facing the radiant heater (314) is reflective for the heat that is radiated by the radiant heater (314).

9. Radiant heating according to one of claims 1 to 8, wherein the heat radiating element (113, 213, 313) comprises at the centre an opening for passing the laser beam.

10. Radiant heating according to one of claims 1 to 9, wherein at one side of the heat radiating element an insulation (216) made of graphite is provided at a distance.

11. Laser sintering device for manufacturing a three-dimensional object by subsequently solidifying layers of a powder material that can be solidified at positions corresponding to the respective cross-section by means of radiation having
a radiant heating (112, 212, 312) according to one of claims 1 to 10 for heating the material that can be solidified.

**Revendications**

1. Chauffage par rayonnement pour le chauffage du matériau de structure d'un dispositif de frittage par laser avec un élément de rayonnement de chaleur (113, 213, 313) plan, des branchements de courant (116, 116') étant prévus sur l'élément de rayonnement de chaleur (113), de sorte que du courant pour l'exploitation sous forme d'élément de chauffage par résistance peut être envoyé par l'élément de rayonnement de chaleur (113) dans le sens de la surface, **caractérisé en ce que** l'élément de rayonnement de chaleur (113, 213, 313) est à base d'un matériau présentant une faible inertie thermique, et **en ce que** l'élément de rayonnement de chaleur (113, 213, 313) est à base d'un matériau qui présente à une température de 20 °C une diffusivité thermique de plus d'environ $1,5 \cdot 10^{-4}$ m$^2$/s, l'élément de rayonnement de chaleur (113') étant réalisé au moins dans une partie sous la forme d'une bande de surface en forme de méandre.

2. Chauffage par rayonnement selon la revendication 1, dans lequel l'élément de rayonnement de chaleur (113, 213, 313) est à base d'un matériau qui présente à une température de 20 °C une diffusivité thermique supérieure à environ $2.10^{-4}$ m$^2$/s.

3. Chauffage par rayonnement selon l'une quelconque des revendications 1 et 2, dans lequel l'élément de rayonnement de chaleur (113, 213, 313) présente une épaisseur d'environ 2 mm ou moins.

4. Chauffage par rayonnement selon l'une quelconque des revendications 1 à 3, dans lequel l'élément de rayonnement de chaleur (213, 313) est à base d'un film de graphite.

5. Chauffage par rayonnement selon l'une quelconque des revendications 1 à 3, dans lequel l'élément de rayonnement de chaleur est à base d'une plaque de graphite (113).

6. Chauffage par rayonnement selon l'une quelconque des revendications 1 à 5, un fil de chauffage (215) étant prévu en contact avec l'élément de rayonnement de chaleur (213) pour le chauffage de l'élément de rayonnement de chaleur (213).

7. Chauffage par rayonnement selon l'une quelconque des revendications 1 à 6, un radiateur infrarouge (314) étant prévu pour le chauffage de l'élément de rayonnement de chaleur (313).

8. Chauffage par rayonnement selon la revendication 7 également avec une enveloppe (315) isolante, le radiateur (314) étant enfermé entre l'enveloppe isolante (315) et l'élément de rayonnement de chaleur (313) et l'enveloppe (315) isolante étant réfléchissante sur son côté opposé au radiateur (314) pour le rayonnement diffusé par le radiateur (314).

9. Chauffage par rayonnement selon l'une quelconque des revendications 1 à 8, l'élément de rayonnement de chaleur (113, 213, 313) présentant au centre une ouverture pour le passage d'un faisceau laser.

10. Chauffage par rayonnement selon l'une quelconque des revendications 1 à 9, une isolation (216) en graphite étant prévue à distance sur un côté de l'élément de rayonnement de chaleur.

11. Dispositif de frittage par laser pour la fabrication d'un objet en trois dimensions par durcissement consécutif de couches d'un matériau pulvérulent durcissable aux endroits correspondant à la section concernée au moyen de rayonnement avec un chauffage par rayonnement (112, 212, 312) selon l'une quelconque des revendications 1 à 10 pour le réchauffement du matériau durcissable.

Fig. 1

**Fig. 2**

113'

116    116'

Fig. 3

Fig. 4

EP 1 762 122 B2

Fig. 5

EP 1 762 122 B2

**EP 1 762 122 B2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9208566 A
- US 20040074898 A1